Europäisches Patentamt

European Patent Office

Office européen des brevets

(19)

(11) Numéro de publication: **0 253 157**
**A1**

(12) **DEMANDE DE BREVET EUROPEEN**

(21) Numéro de dépôt: **87108898.5**

(22) Date de dépôt: **22.06.87**

(51) Int. Cl.⁴: **B60T 8/42**

(30) Priorité: **04.07.86 FR 8610234**

(43) Date de publication de la demande:
**20.01.88 Bulletin 88/03**

(84) Etats contractants désignés:
**DE ES GB IT SE**

(71) Demandeur: **Borruto, Dominique**
**Les Rafforts Sciez**
**F-74300 Cluses(FR)**

(72) Inventeur: **Borruto, Dominique**
**Les Rafforts Sciez**
**F-74300 Cluses(FR)**

(74) Mandataire: **Hagry, François**
**Cabinet François HAGRY Conseil en Brevets**
**d'Invention 52, avenue de la Gare**
**F-74100 Annemasse(FR)**

(54) **Dispositif destiné à éviter le blocage ou le patinage d'une roue de véhicule lors du freinage.**

(57) En réponse à une détection de risque de blocage ou patinage de la roue (7) par un capteur (11) relié à une centrale de traitement (12), le dispositif prend en charge le circuit hydraulique de freinage pour soulager ou actionner le frein (6) de roue (7) et éviter le blocage ou le patinage. Il comprend, monté sur la conduite principale (5), un limiteur de débit (17) et sur une conduite (14) en dérivation par rapport à la première (5) une pompe (15) actionnée par un moteur (13) commandé par la centrale (12). En cas de blocage, la pompe (15) aspire le fluide hydraulique du côté du cylindre de frein (6) pour le refouler en amont du limiteur de débit (17) et soulager le frein (6). En cas de patinage, la pompe (15) aspire le fluide du côté du maître-cylindre (3) pour le refouler en aval du limiteur (17) et agir sur le frein (6).

FIG.2

## DISPOSITIF DESTINE A EVITER LE BLOCAGE OU LE PATINAGE D'UNE ROUE DE VEHICULE LORS DU FREINAGE

La présente invention est relative au domaine du freinage des véhicules terrestres à roues, notamment automobiles, et concerne plus particulièrement un dispositif destiné à améliorer l'efficacité de la sécurité du freinage en évitant le blocage ou le patinage des roues.

Les dispositifs de freinage usuels sont actionnés par le conducteur du véhicule par l'intermédiaire d'une commande telle qu'une pédale qui transmet par le truchement d'un circuit hydraulique à maître-cylindre et cylindres et roue l'effort nécessaire au freinage sur chacune des roues. Par construction, les caractéristiques des organes mis en oeuvre sont fixées une fois pour toutes : viscosité de l'huile hydraulique, surfaces de friction, force de freinage en fonction de la force exercée sur la pédale de commande ...

Dans des conditions normales d'utilisation, ces dispositifs connus donnent satisfaction, l'adhérence des roues sur le sol restant supérieure au couple de freinage. Il est cependant fréquent que le véhicule rencontre, souvent de façon inattendue, des conditions particulières néfastes à un freinage bien réparti sur les roues et pouvant altérer dangereusement la stabilité du véhicule.

Si pendant le freinage une ou plusieurs roues rencontrent des conditions d'adhérence différentes (verglas, boues, flaques d'huile ...) le couple de freinage sur ces roues dépasse brutalement le couple d'entrainement au roulement et la ou les roues concernées se bloquent et déséquilibrent le véhicule qui peut ainsi déraper. L'efficacité maximale du freinage permettant l'arrêt sur une distance minimale et de la conduite sans altérer la stabilité du véhicule est atteinte lorque l'on se maintient en deçà de ces situations critiques.

Cette stabilité est de même altérée dans le phénomène inverse, lorsque l'adhérence devient trop faible par rapport au couple moteur et où une roue se met à patiner.

Pour éviter ces phénomènes, on a déjà proposé différents dispositifs dits d'anti-blocage et d'anti-patinage. Ceux-ci comportent généralement trois parties distinctes : des capteurs de vitesse associés à chaque roue, un dispositif électronique de détection de glissement comparant les informations reçues des capteurs avec des valeurs de consigne, et un dispositif de prise en charge momentanée du circuit de freinage en réponse à une déviation par rapport aux valeurs de consigne pour supprimer ou diminuer la pression hydraulique sur la roue trop ou trop peu freinée. Ces matériels de prise en charge qui donnent assez bien satisfaction sont très complexes, ce qui les rend très onéreux et conduit donc à n'en doter que des véhicules d'un prix très élevé.

La présente invention vise à proposer un nouveau dispositif de prise en charge du circuit de freinage en réponse aux capteurs et à l'électronique de commande, ces derniers organes étant connus de l'état de la technique, ce dispositif ne présentant pas les caractères de complexité qui viennent d'être évoqués. Ce dispositif disposé entre le maître-cylindre et le cylindre de roue est destiné à agir directement sur l'arrivée du fluide hydraulique au cylindre de freinage de la roue dont on veut prévenir le blocage ou le patinage pour diminuer ou augmenter le plus rapidement possible la pression efficace dans le cylindre de frein et ainsi diminuer ou augmenter la force de freinage sur la roue concernée.

Les caractéristiques de l'invention qui font l'objet de la revendication 1, et certains autres aspects ou avantages apparaitront à la lumière de la description qui suit et pour l'intelligence de laquelle on se reportera aux dessins, dont :

-la figure 1 représente très schématiquement un dispositif de freinage auquel peut être appliqué le dispositif selon l'invention,

-la figure 2 illustre un mode d'exécution d'un dispositif conforme à l'invention.

-la figure 3 montre un autre mode d'exécution d'un dispositif conforme à l'invention.

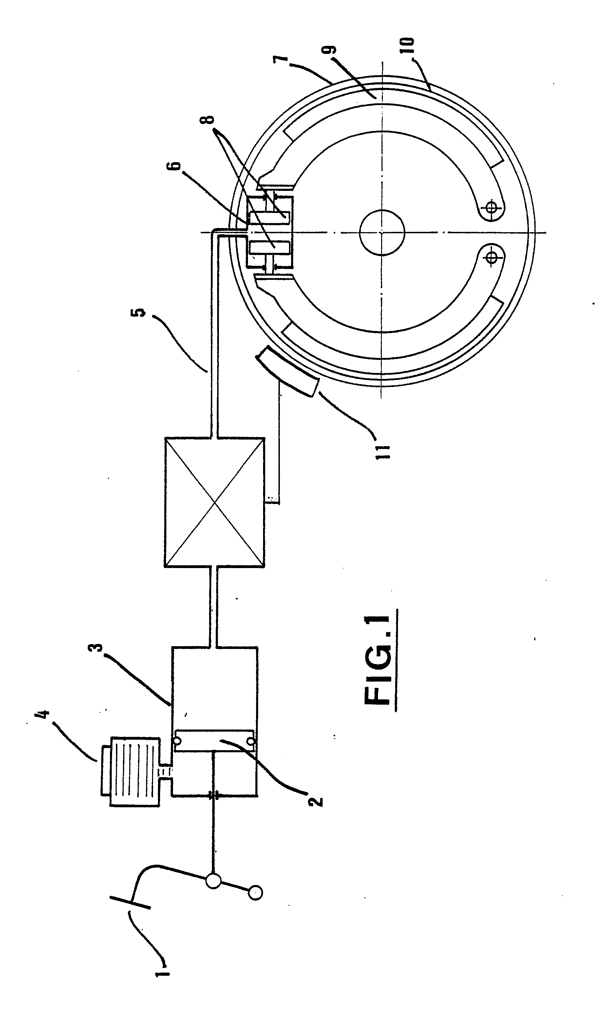

Dans le dispositif de freinage représenté à la figure 1, on reconnait une pédale de frein classique agissant sur le piston 2 d'un maître-cylindre 3 relié au réservoir usuel 4 de fluide hydraulique. Le piston 2 commande par une conduite 5 la transmission de la pression du maître-cylindre 3 vers un cylindre 6 de frein de roue 7. Cette pression agit sur deux pistons opposés 8 pour commander la position d'orga nes de friction 9 relativement à une surface de friction portée par la roue 7. Tout ceci est bien connu de l'homme du métier et il est inutile d'en approfondir le détail.

Le dispositif selon l'invention, figuré ici par un simple rectangle, est interposé sur la conduite 5 et est relié fonctionnellement à un capteur de blocage ou patinage de roue 11 associé à la roue 7 et qui peut être de tout type connu approprié à cette utilisation.

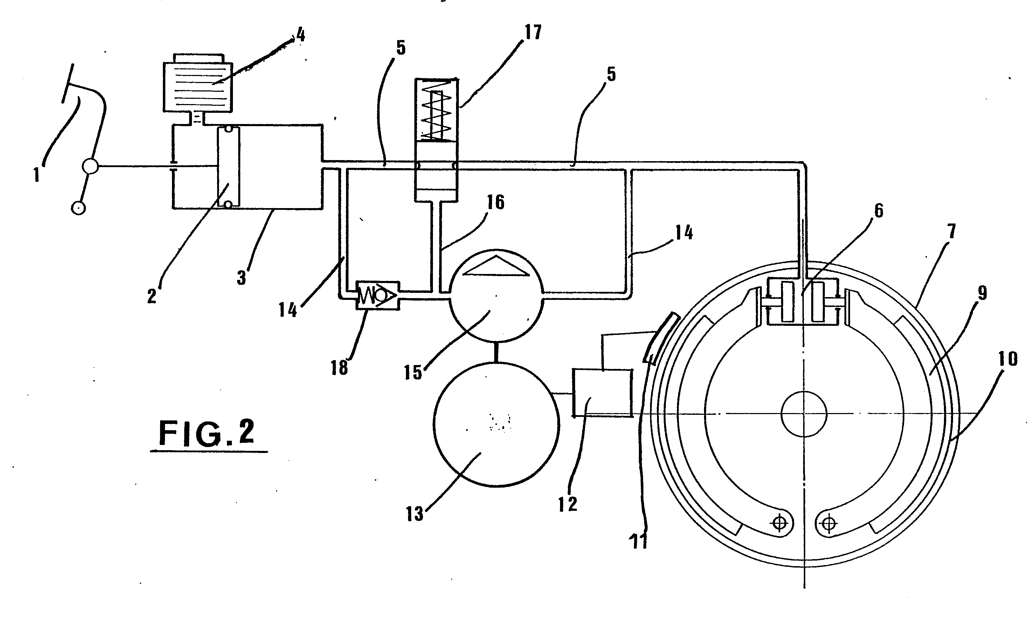

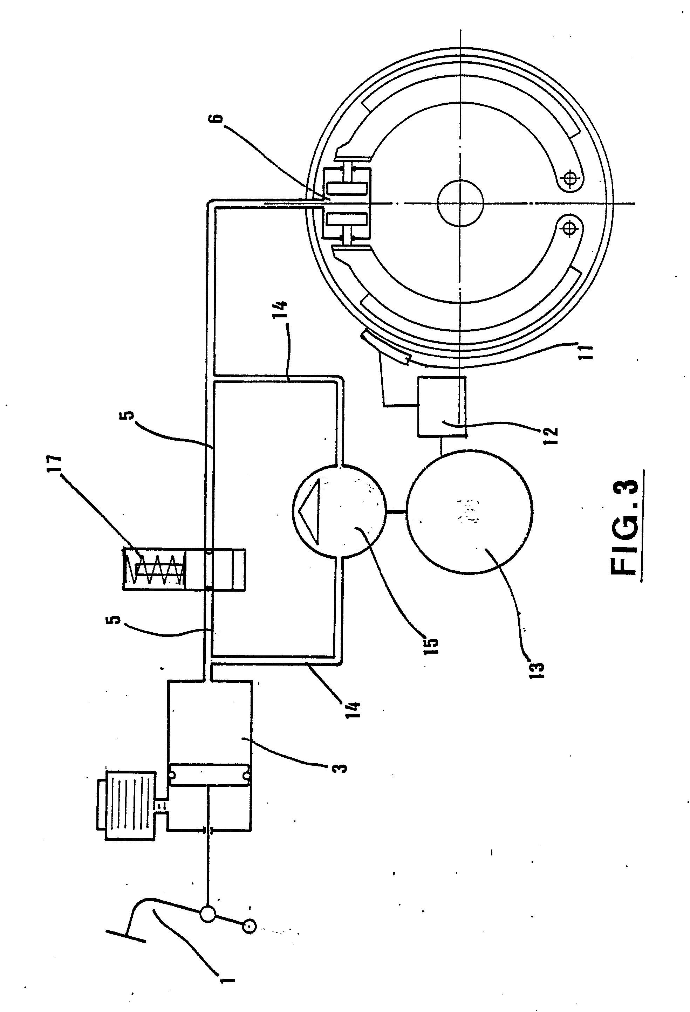

Aux figures 2 et 3, on retrouve les mêmes organes classiques affectés des mêmes références numériques, mais avec le dispositif selon l'invention illustré de manière plus détaillée.

Le capteur de blocage ou patinage de roue 11 qui détecte les variations de vitesse, accélérations ou décélérations, de roulement de la roue 7, notamment un blocage en rotation, donc en glissement sur la chaussée ou une décélération telle que ce blocage ou patinage est imminent ou présent, transmet cette information à une centrale électronique de gestion et de commande 12 qui, par comparaison avec des valeurs de consigne, va ou non influer sur le dispositif selon l'invention.

Selon la circonstance détectée par le capteur 11 et traitée par la centrale 12, le dispositif va ou non être activé par un ordre donné à un moteur électrique 13, partie intégrante de ce dispositif qui va maintenant être décrit plus en détail.

En dérivation sur la conduite 5 entre la maître-cylindre 3 et le cylindre de frein de roue 6, est disposée une conduite 14 sur laquelle est interposée une pompe hydraulique 15. En amont de la pompe 15, qui est commandée par le moteur 13, est branchée une conduite 16 pour alimenter et commander hydrauliquement un organe régulateur de débit 17 dans la conduite principale 5, donc agissant directement sur la pression efficace de freinage fournie au cylindre de roue 6. Par ailleurs, sur la conduite 14, du côté amont de la pompe 15, c'est-à-dire du côté du maître-cylindre 3, peut être interposé un dispositif à clapet anti-retour 18 s'opposant jusqu'à un certain seuil au reflux du fluide hydraulique de la pompe 15 vers le maître-cylindre 3. Ce dispositif à clapet anti-retour 18, si l'on ne s'intéresse qu'à l'effet anti-blocage de roue, est très utile mais non absolument nécessaire. Par contre, si l'on souhaite aussi, le cas échéant, obtenir l'effet d'anti-patinage, il est susceptible, selon ses caractéristiques, d'entraver cette action, aussi peut-il dans ce cas être supprimé, les diverses sections de passage du fluide hydraulique aux endroits critiques étant conformées et dimensionnées en fonction du simple ou du double effet recherchés. En conséquence, dans ce qui suit, on ne le prendra en considération que comme appoint possible, s'il ne s'agit que d'obtenir l'anti-blocage seul.

Lorsqu'à la suite d'une décélération ou glissement anormal de la roue 7, détecté par le capteur 11, la centrale 12 met en marche le moteur 13, la pompe 15 entre en fonction pour refouler de l'aval vers l'amont de la conduite 14 le fluide hydraulique et l'envoyer par la conduite 16 vers le régulateur de débit 17, pour l'activation de celui-ci. On obtient ainsi une baisse de pression, donc d'intensité de freinage dans le cylindre de roue 6 mais qui ne devient effective que si le régulateur de débit 17 entrave correctement la transmission de débit du maître-cylindre 3 vers le cylindre de roue 6.

Ce régulateur de débit 17 sur la conduite principale 5 peut être de tout type approprié. Un mode d'exécution qui s'est révélé fiable peut être un dispositif à cylindre et piston sollicité par la pression fournie par la pompe 15 à l'encontre d'un ressort de rappel calibré. Le piston fixe en rotation est percé ou muni d'une gorge pour faire communiquer librement en régime normal l'amont et l'aval de la conduite 5, mais à la mise en marche quand nécessaire de la pompe 15, limiter le passage du fluide hydraulique de l'amont vers l'aval de la conduite 5.

On comprend que dès que la pompe 15 a un débit supérieur à celui qu'autorise le régulateur-limiteur de débit 17, la pression hydraulique engendrée par le maître-cylindre 3 diminue en aval, donc au niveau du cylindre de roue 6 et est entièrement disponible en amont du régulateur-limiteur 17 pour pouvoir agir sur les circuits de freinage des autres roues qui ne sont donc nullement affectées et continuent à agir dans leurs conditions normales. Le clapet anti-retour 18 assure, lui, dès la mise en marche de la pompe 15, la transmission de la pression de commande vers le régulateur-limiteur de débit 17, ce qui permet de n'avoir à utiliser qu'une pompe 15 et un moteur 13 de très faible puissance pour atteindre le but recherché. Par ailleurs, ce clapet 18, dans des conditions normales, c'est-à-dire quand la pompe 15 est à l'arrêt, sert à mettre hors circuit la dérivation que constitue la canalisation secondaire 14.

Pour éviter un déséquilibre dans le circuit hydraulique de freinage des autres roues et d'avoir après soulagement de la pression efficace au niveau du cylindre de roue 6 une pression par trop faible, le régulateur-limiteur de débit ne se ferme jamais totalement, et pour le garantir, dès qu'une pression déterminée est atteinte dans la conduite 16, le clapet anti-retour 18 qui peut être par exemple muni d'un ressort calibré va s'ouvrir pour le retour du fluide hydraulique vers l'amont du dispositif, c'est-à-dire vers la conduite 5 entre le maître-cylindre 3 et le régulateur-limiteur 17. Ce fluide est ainsi disponible pour le fonctionnement dans des conditions normales des dispositifs de freinage des autres roues.

Le dispositif qui vient d'être décrit peut également fonctionner pour obtenir un effet d'anti-patinage. Dans ce cas, le moteur 13 et la pompe 15 doivent fonctionner dans le sens inverse du précédent pour pomper du fluide de l'amont vers l'aval de la conduite 14 en réponse à un signal de patinage en provenance du capteur 11 et de la centrale 12. Une surpression sera ainsi créée en aval du régulateur-limiteur 17 dans la conduite 5, surpression disponible dans le cylindre de roue 6 pour freiner cette roue 7. Comme déjà évoqué plus haut, il est clair que dans ce cas, le dispositif anti-retour 18 doit de préférence être absent ou avoir des caractéristiques permettant l'obtention de l'effet recherché avec des seuils de fonctionnement assez précis. Dans l'exemple de réalisation qui vient d'être décrit, la commande du régulateur-limiteur de débit 17 est hydraulique et se fait directement par action de la pompe 15.

La figure 3 illustre un autre exemple de réalisation de dispositif selon l'invention où seuls sont représentés les organes nécessaires à la compréhension du fonctionnement avec les mêmes références que précédemment. Dans ce cas, le régulateur-limiteur de débit 17 est à commande non plus hydraulique mais électrique et réagit à un signal en provenance directe du capteur 11 et de la centrale 12 (présents à la figure 2). Pour le reste, le fonctionnement est le même que précédemment, le moteur 13 entrainant la pompe 15 soit dans un sens, soit dans l'autre pour empêcher soit le blocage de la roue, soit son patinage selon l'anomalie détectée par le capteur 11.

Dans les deux exemples décrits, le moteur 13 peut être de tout type connu approprié et peut fonctionner à vitesse constante pour donner à la pompe 15 un régime constant faisant varier le régulateur-limiteur 17 avec une grande progressivité. Il peut aussi être à vitesse variable en fonction de l'information provenant du capteur 11 et traitée par la centrale 12 en fonction des informations en provenance des capteurs des autres roues.

De même, en vue de la stabilité du véhicule, la centrale 12 peut recevoir des informations en provenance des capteurs des autres roues et influer par le moteur 13 et la pompe 15 sur le degré de freinage appliqué à la roue 7 qui lui est associée. Pareillement, la pompe 15 ou le moteur 13 peuvent être à régime variable en fonction des informations reçues, l'équilibre entre les degrés de freinage des différentes roues concernées étant pris en compte par la centrale 12.

Dans ce qui précède, il est clair que les variations de volume du fluide hydraulique effectivement actif par le jeu du régulateur-limiteur 17 sont compensées et absorbées par le réservoir normal 4 associé au maître-cylindre 3.

De la description ci-dessus, on voit que les à-coups engendrés par les dispositifs d'anti-blocage ou d'anti-patinage connus qui utilisent des électrovannes par tout-ou-rien travaillant en rafales d'ouvertures et fermetures successives sont supprimés puisqu'une certaine progressivité due à une pompe et à un étranglement réglable par le régulateur-limiteur est obtenue.

Le dispositif qui vient d'être décrit pour une roue 7 peut évidemment se retrouver en parallèle pour la roue du même train avant ou arrière, ou pour chacune des roues du véhicule, et ne constituer qu'un bloc compact disposé juste en aval du maître-cylindre 3, ce qui doit en diminuer l'encombrement et en faciliter la maintenance générale.

Par ailleurs, il est à signaler qu'un régulateur-limiteur de débit invariable pourrait sembler suffire, mais le temps de réaction au freinage normal en serait forcément accru de façon indésirable, surtout à froid, aussi cette solution particulièrement simple ne semble-t-elle pas devoir être sérieusement retenue.

## Revendications

1.-Dispositif de prise en charge du circuit hydraulique de freinage d'une roue (7) de véhicule pour éviter respectivement le blocage ou le patinage de cette roue (7), disposé entre le maître-cylindre (3) et un cylindre (6) de frein de roue (7), caractérisé par le fait qu'il comporte, montée sur une conduite en dérivation (14) de la conduite principale (5) du fluide hydraulique, une pompe (15) actionnée par un moteur (13) et destinée, en réponse à une information fournie par un capteur (11) de blocage ou de patinage de la roue (7), respectivement, et traitée par une centrale de contrôle (12) pour commander le fonctionnement du moteur (13), respectivement à aspirer le fluide hydraulique du côté du cylindre (6) de roue (7) pour le refouler dans la conduite principale (5) du côté du maître-cylindre (3) en amont d'un régulateur-limiteur de débit (17), ou à aspirer le fluide hydraulique du côté du maître-cylindre (3) pour le refouler dans la conduite principale (5) du côté du cylindre (6) de roue (7) en aval du régulateur-limiteur de débit (17).

2.-Dispositif selon la revendication 1, caractérisé par le fait que le régulateur-limiteur de débit (17) est du type à cylindre et piston et est commandé par la pression du fluide hydraulique en provenance du maître-cylindre (3) ou de la pompe (15) et existant en amont de la pompe (15) dans la conduite de dérivation (14).

3.-Dispositif selon la revendication 2, caractérisé par le fait que la pression de commande du régulateur-limiteur de débit (17) est transmise par une conduite (16) branchée sur la conduite en dérivation (14) entre la pompe (15) et le maître-cylindre (3).

4.-Dispositif selon la revendication 3, caractérisé par le fait qu'il comporte en outre entre le branchement de la conduite (16) de commande du régulateur-limiteur de débit (17) et le maître-cylindre (3), un clapet antiretour (18) s'opposant à la transmission de pression à partir du maître-cylindre (3) vers la pompe (15) et la conduite de commande (16).

5.-Dispositif selon la revendication 4, caractérisé par le fait que le clapet anti-retour (18) est calibré pour laisser passer en direction du maître-cylindre (3) le débit en provenance de la pompe (15) quand celui-ci dépasse un certain seuil dans la conduite de commande (16) du régulateur-limiteur de débit (17).

6.-Dispositif selon la revendication 1, caractérisé par le fait que le régulateur-limiteur de débit (17) est commandé directement par un signal électrique en provenance du capteur (11) et de la centrale de commande (12).

**FIG.1**

0 253 157

FIG.2

0 253 157

**FIG.3**

0 253 157

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A-2 056 606 (LUCAS)<br>* Page 2, ligne 22 - page 3, ligne 29; figure 1 * | 1,6 | B 60 T 8/42 |
| A | | 2-5 | |
| | --- | | |
| A | DE-A-2 311 789 (CITROEN)<br>* Page 3, ligne 24 - page 5, ligne 8; figure 1 * | 2,3 | |
| | --- | | |
| A | EP-A-0 152 344 (RENAULT)<br>* Abrégé; figures * | 4,5 | |
| | --- | | |
| A | DE-A-3 142 137 (FISCHER)<br>* Page 4, ligne 27 - page 5, ligne 17; figure * | 1-6 | |
| | | | **DOMAINES TECHNIQUES RECHERCHES (Int. Cl.4)** |
| | --- | | |
| A | US-A-4 099 793 (YAMAHA)<br>* Abrégé; figure 5 * | 1-6 | B 60 T |
| | ----- | | |

Le présent rapport de recherche a été établi pour toutes les revendications

| Lieu de la recherche | Date d'achèvement de la recherche | Examinateur |
|---|---|---|
| LA HAYE | 20-12-1987 | BLURTON M.D |